# FASCICULE DE BREVET EUROPEEN

(11) **EP 3 949 359 B1**
(45) Date de publication et mention de la délivrance du brevet: **26.07.2023**
(21) Numéro de dépôt: 20713325.7
(22) Date de dépôt: 27.03.2020
(51) Int. Cl.: H04M 1/02, G06V 40/13

(54) **DISPOSITIF A CAPTEUR OPTIQUE**
VORRICHTUNG MIT OPTISCHEM SENSOR
DEVICE COMPRISING AN OPTICAL SENSOR

(30) Priorité: 29.03.2019 FR 1903347
(43) Date de publication de la demande: 09.02.2022
(73) Titulaire: ISORG, 87068 Limoges Cedex 3 (FR)
(72) Inventeur: BOUTHINON, Benjamin, 38000 GRENOBLE (FR); MULLER, Pierre, 38000 GRENOBLE (FR); SCHWARTZ, Wilfrid, 38000 GRENOBLE (FR); PUSZKA, Agathe, 38000 GRENOBLE (FR); CHABLE, Quentin, 38000 GRENOBLE (FR)
(74) Mandataire: Cabinet Beaumont
(86) Numéro de dépôt international: PCT/EP2020/058866
(87) Numéro de publication internationale: WO 2020/201165

(56) Documents cités:
- EP-A1- 3 388 977
- EP-A1- 3 396 442
- WO-A1-2017/211152
- US-A1- 2017 220 844
- US-A1- 2018 129 852

## Description

La présente demande de brevet revendique la priorité de la demande de brevet français FR19/03347 qui sera considérée comme faisant partie intégrante de la présente description.

### Domaine technique

La présente description concerne de façon générale les dispositifs comprenant un capteur optique sous un écran.

### Technique antérieure

De nombreuses techniques d'intégration de capteur optique sous un écran partiellement transparent sont connues, par exemple pour l'intégration d'un capteur d'empreintes digitales dans un téléphone mobile.

Le document WO 2017/211152 décrit des collimateurs optiques pour un module de capteur optique sous écran pour un capteur d'empreintes digitales sur écran.

Le document EP 3 388 977 décrit un capteur biométrique et un dispositif utilisant un tel capteur.

Le document US 2018/0129852 décrit un panneau d'affichage et un dispositif optique.

Le document US 2017/0220844 décrit un capteur d'empreintes digitales.

Le document EP 3 396 442 décrit un écran d'affichage, un dispositif d'affichage et un terminal mobile.

### Résumé de l'invention

Un mode de réalisation pallie tout ou partie des inconvénients des capteurs connus.

L'invention est définie telle que revendiquée dans la revendication 1 et les revendications qui en dépendent.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue en perspective d'un téléphone mobile ;
la figure 2 est une vue en coupe transversale et partielle d'un mode de réalisation d'un dispositif comprenant un capteur optique sous un écran ;
la figure 3 est une vue en coupe transversale et partielle d'un autre mode de réalisation d'un dispositif comprenant un capteur optique sous un écran ;
la figure 4 est une vue en coupe transversale d'un mode de réalisation d'un dispositif comprenant un capteur optique sous un écran ;
la figure 5 est une vue en coupe transversale d'un autre mode de réalisation d'un dispositif comprenant un capteur optique sous un écran ;
la figure 6 est une vue en coupe transversale d'un autre mode de réalisation d'un dispositif comprenant un capteur optique sous un écran ;
la figure 7 est une vue en coupe transversale d'encore un autre mode de réalisation d'un dispositif comprenant un capteur optique sous un écran ;
la figure 8 est une vue en coupe transversale et partielle d'un mode de réalisation d'un filtre angulaire et d'une couche d'interface surjacente ;
la figure 9 est une vue en coupe transversale et partielle d'un autre mode de réalisation d'un filtre angulaire et d'une couche d'interface surjacente ;
la figure 10 est une vue en coupe transversale et partielle d'un autre mode de réalisation d'un filtre angulaire et d'une couche d'interface surjacente ;
la figure 11 est une vue en coupe transversale et partielle d'encore un autre mode de réalisation d'un filtre angulaire et d'une couche d'interface surjacente ;
la figure 12 est une vue de dessus schématique d'un mode de réalisation d'un dispositif comprenant un capteur optique sous un écran ;
la figure 13 est une vue de dessus schématique d'un autre mode de réalisation d'un dispositif comprenant un capteur optique sous un écran ;
la figure 14 est une vue de dessus schématique d'un autre mode de réalisation d'un dispositif comprenant un capteur optique sous un écran ;
la figure 15 est une vue de dessus schématique d'encore un autre mode de réalisation d'un dispositif comprenant un capteur optique sous un écran ;
la figure 16 est une vue en coupe transversale et partielle illustrant un détail d'un mode de réalisation d'un dispositif comprenant un capteur optique sous un écran ;
la figure 17 est une vue en coupe transversale d'un mode de réalisation d'un dispositif comprenant un capteur optique sous un écran, comprenant en outre un capteur de pression ;
la figure 18 est une vue en coupe transversale d'un autre mode de réalisation d'un dispositif comprenant un capteur optique sous un écran, comprenant en outre un capteur de pression ;
la figure 19 est une vue en coupe transversale d'un autre mode de réalisation d'un dispositif comprenant un capteur optique sous un écran, comprenant en outre un capteur de pression ;
la figure 20 est une vue en coupe transversale d'encore un autre mode de réalisation d'un dispositif comprenant un capteur optique sous un écran, comprenant en outre un capteur de pression ;
la figure 21 est une vue en coupe transversale d'un mode de réalisation d'un dispositif comprenant un capteur optique sous un écran, comprenant en outre un filtre infrarouge ;
la figure 22 est une vue en coupe transversale d'un autre mode de réalisation d'un dispositif comprenant un capteur optique sous un écran, comprenant en outre un filtre infrarouge ; et
la figure 23 est une vue en coupe transversale d'encore un autre mode de réalisation d'un dispositif comprenant un capteur optique sous un écran, comprenant en outre un filtre infrarouge.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, l'assemblage du dispositif n'a pas été détaillé.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Divers exemples de mise en œuvre et de réalisation sont exposés par la suite. Indépendamment de la dénomination donnée à ces exemples (modes de réalisation, exemples, variantes, etc.) et les qualificatifs employés (par exemple, de préférence, etc.), seules les parties de description incluent dans la portée des revendications font partie de la présente invention, les autres exemples n'étant utiles que pour mettre en évidence des aspects spécifiques à l'invention par rapport à ce qui n'en fait par partie.

Dans la suite de la description, on appelle lumière visible un rayonnement électromagnétique dont la longueur d'onde est comprise entre 400 nm et 700 nm, et on appelle rayonnement infrarouge un rayonnement électromagnétique dont la longueur d'onde est comprise entre 700 nm et 1 mm. Dans le rayonnement infrarouge, on distingue notamment le rayonnement infrarouge proche dont la longueur d'onde est comprise entre 700 nm et 1,4 micromètres.

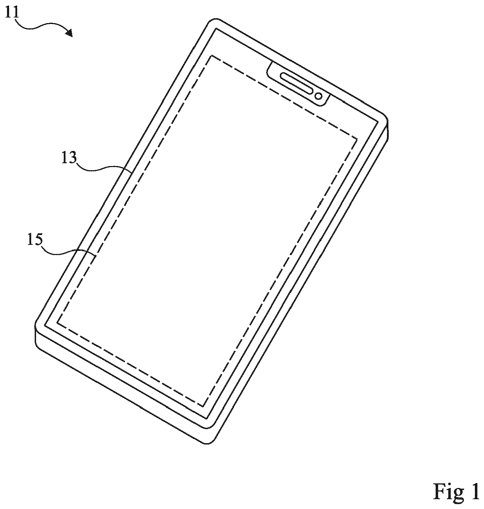

La figure 1 est une vue en perspective d'un téléphone mobile 11.

Le téléphone mobile 11 est équipé d'un dispositif comprenant un écran 13 et un capteur optique 15 disposé sous l'écran 13. Le capteur optique 15 est par exemple un capteur d'empreintes digitales. Le capteur optique 15 tel qu'illustré en figure 1 est de superficie inférieure à la superficie de l'écran 13. Selon une variante de réalisation, le capteur optique et l'écran ont une superficie identique.

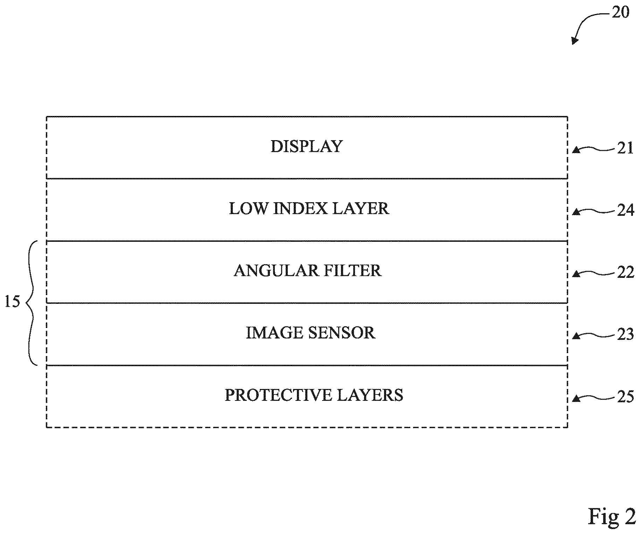

La figure 2 est une vue en coupe transversale et partielle d'un mode de réalisation d'un dispositif 20 comprenant un capteur optique sous un écran partiellement transparent.

Le dispositif 20 comporte une succession de couches superposées de natures différentes.

Une première couche 21, supérieure dans l'orientation de la figure, comprend un écran (DISPLAY) transparent, par exemple un écran de technologie OLED.

Une deuxième couche 22, disposée sous la première couche 21, comprend un filtre angulaire (ANGULAR FILTER).

Une troisième couche 23, disposée sous la deuxième couche 22, comprend un capteur d'image (IMAGE SENSOR).

Entre la première couche 21 et la deuxième couche 22, une quatrième couche 24 comprend au moins une partie optiquement transparente (LOW INDEX LAYER). Selon une variante de réalisation, cette partie est incluse dans la deuxième couche 22.

La deuxième couche 22 et troisième couche 23 constituent ensemble le capteur optique 15.

La quatrième couche 24 constitue une interface optique entre la première couche 21 et la deuxième couche 22.

Optionnellement, l'ensemble est supporté par un empilement 25 de base (PROTECTIVE LAYERS).

L'écran de la première couche 21 est par exemple partiellement transparent et a entre 0,5 et 4 % de transmittance à 530 nm. La première couche 21 peut comprendre en outre :
une couche protectrice (non représentée) disposée sur l'écran, par exemple en verre trempé ; et/ou
un filtre infrarouge (non représenté en figure 2), disposé soit sous l'écran soit entre la couche protectrice et l'écran.

Le filtre angulaire de la deuxième couche 22 comprend :
des microlentilles ; et/ou
une couche ayant des microouvertures.

Le capteur d'image de la troisième couche 23 est par exemple un capteur à photodiodes organiques (OPD, Organic Photodiode) intégrées sur un substrat à transistors CMOS ou un substrat à transistors en couches minces (TFT ou Thin-Film Transistor). Le capteur à photodiodes organiques est par exemple en un mélange de poly(3,4-éthylènedioxythiophène) (PEDOT) et de poly(styrène sulfonate) de sodium (PSS). Le substrat est par exemple en silicium, de préférence en silicium monocristallin. Les transistors TFT sont par exemple en silicium amorphe (a-Si ou amorphous Silicon), en indium, gallium, zinc et oxyde (IGZO Indium Gallium Zinc Oxide) ou en silicium polycristallin basse température (LTPS ou Low Température Polycrystalline Silicon).

Le capteur d'image 23 est de préférence sensible aux longueurs d'onde du spectre visible et du proche infrarouge, c'est-à-dire aux longueurs d'onde comprises entre 400 et 920 nm. Le capteur 23 est de préférence sensible aux longueurs d'onde émises par un écran OLED (RGB), notamment le bleu et le vert dans la plage de longueurs d'onde de 490 nm à 570 nm.

Selon les modes de réalisation décrits, la partie optiquement transparente de la quatrième couche 24 est au moins transparente dans les longueurs d'onde émises par l'écran d'affichage OLED, notamment le bleu et le vert. La partie optiquement transparente a un indice de réfraction inférieur d'au moins 0,1, de préférence d'au moins 0,15, par rapport à l'indice de réfraction d'un matériau optique du capteur optique 15, en contact avec la couche 24. Le matériau optique du capteur optique 15 a typiquement un indice de réfraction compris entre 1,5 et 1,6. La partie optiquement transparente est par exemple une couche d'air, une couche de résine à faible indice optique ou une couche d'un adhésif à faible indice optique (LOCA ou Liquid Optically Clear Adhesive), typiquement de l'ordre de 1,34 à 1,5. Dans la suite de la description, on qualifie de "faible" indice optique ou de réfraction un indice inférieur à 1,5, et de "fort" un indice supérieur ou égal à 1,5. La résine à faible indice optique et l'adhésif à faible indice optique sont par exemple colorés et permettent ainsi un filtrage en longueur d'onde. L'empilement 25 (PROTECTIVE LAYERS) comprend plusieurs éléments comme par exemple :
une couche de blindage, par exemple en cuivre ; et/ou
une couche de dissipation thermique, par exemple en graphite ; et/ou
une couche (ou "cushion") d'absorption de chocs.

Des couches d'adhésif permettant de fixer tout ou partie des couches entre elles peuvent être présentes mais n'ont pas été représentées. De préférence, en particulier si l'adhésif est disposé au-dessus du capteur d'image, l'adhésif est optiquement transparent et non diffusant (Optically Clear Adhesive, OCA). Au sens de la présente description, on considère qu'un matériau est "non diffusant" s'il dévie un faisceau lumineux de moins d'environ 3,5 degrés, de préférence de moins de 3,5 degrés, de sa direction initiale.

La partie périphérique du dispositif n'a pas été représentée en figure 2 et sera détaillée ultérieurement.

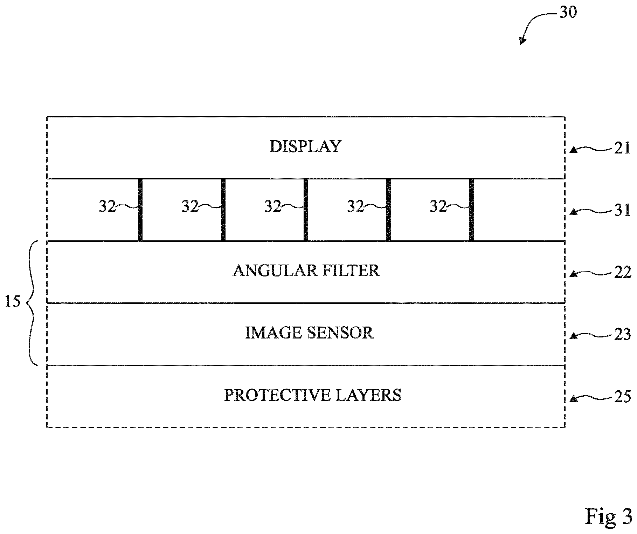

La figure 3 est une vue en coupe transversale et partielle d'un autre mode de réalisation d'un dispositif 30 comprenant un capteur optique sous un écran partiellement transparent.

Le dispositif 30 comporte une succession de couches superposées de natures différentes.

Une première couche 21, supérieure dans l'orientation de la figure, comprend un écran (DISPLAY) transparent, par exemple un écran de technologie OLED.

Une deuxième couche 22, disposée sous la première couche 21, comprend un filtre angulaire (ANGULAR FILTER).

Une troisième couche 23, disposée sous la deuxième couche 22, comprend un capteur d'image (IMAGE SENSOR).

Entre la première couche 21 et la deuxième couche 22, un niveau 31 comprend un ou plusieurs éléments rigides 32.

La deuxième couche 22 et troisième couche 23 constituent ensemble le capteur optique 15.

Le niveau 31 constitue, au moins entre le ou les éléments rigides, une interface optique entre la première couche 21 et la deuxième couche 22.

Optionnellement, l'ensemble est supporté par un empilement 25 de base (PROTECTIVE LAYERS).

Comme pour le mode de réalisation de la figure 1, l'écran de la première couche 21 est par exemple partiellement transparent, ayant entre 0,5 et 4 % de transmittance à 530 nm.

La première couche 21 peut comprendre en outre :
une couche protectrice (non représentée) disposée sur l'écran, par exemple en verre trempé ; et/ou
un filtre infrarouge (non représenté en figure 3), disposé soit sous l'écran soit entre la couche protectrice et l'écran.

Le filtre angulaire de la deuxième couche 22 comprend :
des microlentilles ; et/ou
une couche ayant des microouvertures.

Le capteur d'image de la troisième couche 23 est, comme dans le mode de réalisation de la figure 2, par exemple un capteur à photodiodes organiques (OPD, Organic Photodiode) intégrées sur un substrat à transistors CMOS ou un substrat à transistors en couches minces (TFT ou Thin-Film Transistor) . Le capteur à photodiodes organiques est par exemple en un mélange de poly(3,4-éthylènedioxythiophène) (PEDOT) et de poly(styrène sulfonate) de sodium (PSS). Le substrat est par exemple en silicium, de préférence en silicium monocristallin. Les transistors TFT sont par exemple en silicium amorphe (a-Si ou amorphous Silicon), en indium, gallium, zinc et oxyde (IGZO Indium Gallium Zinc Oxide) ou en silicium polycristallin basse température (LTPS ou Low Température Polycrystalline Silicon).

Le ou les éléments rigides 32 du niveau 31 s'étendent sur toute la hauteur du niveau de sorte à être en contact avec la première couche 21 et la deuxième couche 22. Les éléments rigides sont ici représentés par des piliers, mais peuvent prendre d'autres formes, par exemple de languettes, de structures en nid d'abeille, etc.

L'empilement 25 (PROTECTIVE LAYERS) comprend plusieurs éléments comme par exemple :
une couche de blindage, par exemple en cuivre ; et/ou
une couche de dissipation thermique, par exemple en graphite ; et/ou
une couche (ou "cushion") d'absorption de chocs.

Des couches d'adhésif permettant de fixer tout ou partie des couches entre elles peuvent être présentes mais n'ont pas été représentées. De préférence, en particulier si l'adhésif est disposé au-dessus du capteur d'image, l'adhésif est optiquement transparent et non diffusant (Optically Clear Adhesive, OCA).

La partie périphérique du dispositif n'a pas été représentée en figure 3 et sera détaillée ultérieurement.

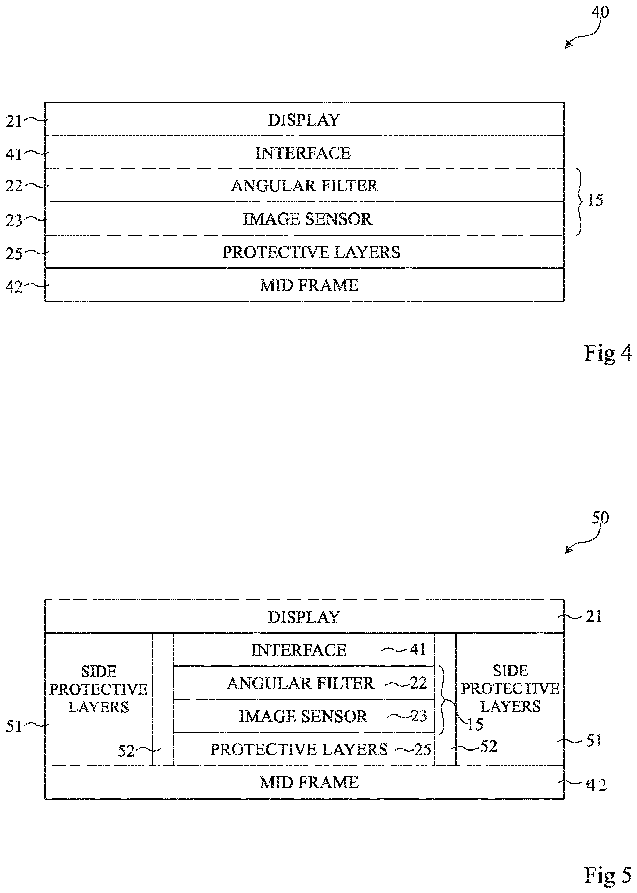

La figure 4 est une vue en coupe transversale d'un mode de réalisation d'un dispositif 40 comprenant un capteur optique 15 sous un écran partiellement transparent 13.

Selon le mode de réalisation représenté en figure 4, le capteur optique 15 a une superficie identique à celle de l'écran 13.

Le dispositif 40 comporte une succession de couches superposées, de superficie identique, mais de natures différentes.

Les première, deuxième et troisième couches 21, 22 et 23 sont identiques ou similaires à celles décrites en relation avec les figures 2 et 3.

Entre la première couche 21 et la deuxième couche 22, une couche d'interface 41 (INTERFACE) comprend au moins une partie optiquement transparente, ou un ou plusieurs éléments rigides ou une combinaison des deux.

Un empilement 25, identique ou similaire à celui décrit en relation avec les figures 2 et 3, peut être situé sous l'ensemble des quatre couches 21, 41, 22 et 23.

L'empilement 25 repose dans cet exemple sur un châssis 42 (MID FRAME).

Dans le cas d'une intégration du dispositif 40 dans un téléphone mobile, le châssis 42 est par exemple un châssis intermédiaire, c'est-à-dire situé entre l'écran et le dos du téléphone mobile, plus précisément entre l'écran et la batterie. Par exemple, le châssis 42 comprend la carte de circuit imprimé du téléphone mobile, sur la face opposée à celle où serait disposé le capteur d'image.

La figure 5 est une vue en coupe transversale d'un autre mode de réalisation d'un dispositif 50 comprenant un capteur optique sous un écran partiellement transparent.

Dans le dispositif 50 représenté en figure 5, les couches intermédiaires du dispositif, c'est-à-dire la couche d'interface 41, la deuxième couche 22, la troisième couche 23 et l'empilement 25, sont de superficie égale ou inférieure à celle des couches externes, c'est-à-dire la première couche 21 et le châssis 42.

Par ailleurs, des empilements périphériques 51 (SIDE PROTECTIVE LAYERS) sont disposés de chaque côté des couches intermédiaires 41, 22, 23 et 25. Les empilements périphériques 51 s'étendent verticalement sur toute la hauteur comprise entre les couches externes 21 et 42. Les empilements périphériques 51 s'étendent horizontalement de l'extrémité périphérique du dispositif 50 jusqu'à une limite proche des couches intermédiaires, de sorte à laisser un espace 52 entre les couches intermédiaires et les empilements périphériques 51. L'espace 52 est par exemple rempli d'air ou de résine.

Les empilements périphériques 51 ont par exemple une fonction de support de la première couche 21 comprenant l'écran sur le châssis 42. Les couches internes sont alors fixées à l'écran et/ou au châssis 42.

Les empilements périphériques 51 comprennent les mêmes éléments que ceux décrits précédemment pour l'empilement 25. Par ailleurs, les empilements périphériques 51 peuvent comprendre des entretoises périphériques facilitant l'assemblage sur le châssis (MID FRAME).

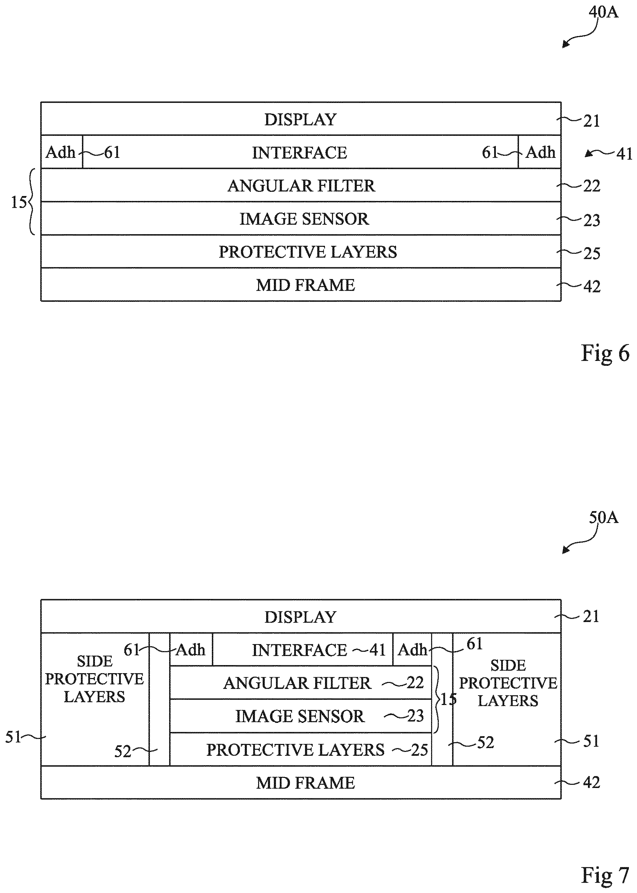

La figure 6 est une vue en coupe transversale d'un autre mode de réalisation d'un dispositif 40A comprenant un capteur optique sous un écran partiellement transparent.

Le dispositif 40A représenté en figure 6 diffère du dispositif 40 décrit en relation avec la figure 4 par le fait que la couche d'interface 41 comprend une partie périphérique constituée d'un adhésif 61 (Adh).

L'adhésif permet de fixer le capteur optique 15 à la première couche 21 comprenant l'écran.

L'adhésif 61 est de préférence un adhésif optiquement transparent et non diffusant (OCA, Optically Clear Adhesive).

Selon une variante de réalisation, l'adhésif 61 est un adhésif opaque dans les longueurs d'onde pour lesquelles le capteur optique 15 est sensible, c'est-à-dire opaque dans les longueurs d'onde du spectre visible et du proche infrarouge, comprises entre 400 et 920 nm. Cela permet de faciliter la calibration du capteur d'image. L'adhésif 61 a par exemple un indice de réfraction supérieur à celui de l'écran facilitant l'absorption de lumière oblique dans l'adhésif 61 opaque.

La figure 7 est une vue en coupe transversale d'encore un autre mode de réalisation d'un dispositif 50A comprenant un capteur optique sous un écran partiellement transparent.

Le dispositif 50A illustré en figure 7 est une combinaison des dispositifs 50 et 40A décrits en relation avec les figures 4 et 6. Par conséquent, partant d'une structure telle qu'illustrée par la figure 4, le dispositif 50A comprend en outre des empilements périphériques 51 et une partie périphérique constituée d'un adhésif 61.

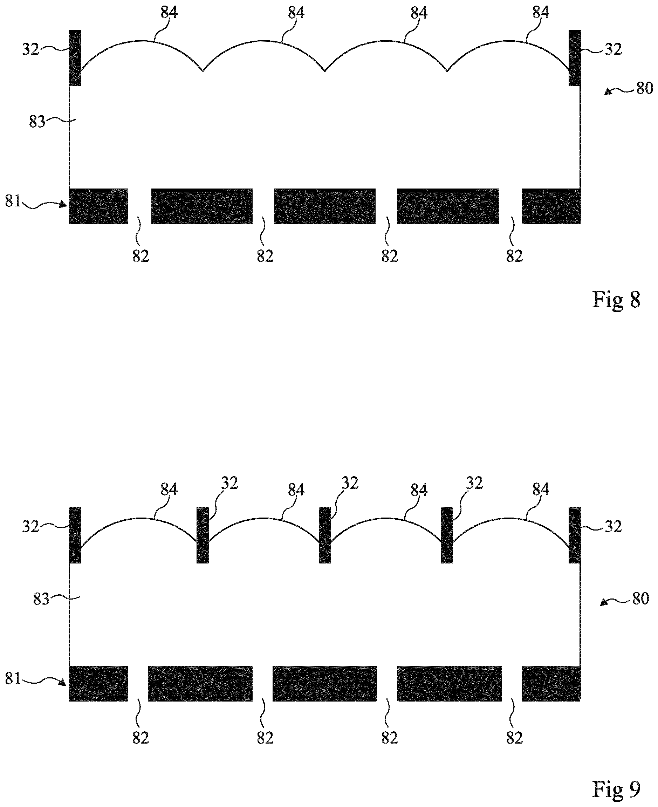

La figure 8 est une vue en coupe transversale et partielle d'un mode de réalisation d'un filtre angulaire 80 et d'une couche d'interface surjacente.

Le filtre angulaire 80 comprend une couche 81 ayant des microouvertures 82. Le filtre angulaire 80 comprend en outre un matériau optique 83 disposé sur la couche 81. La surface supérieure du matériau optique 83, dans l'orientation de la figure, est conformée pour définir des microlentilles 84. Les microlentilles 84 sont disposées en vis-à-vis des microouvertures. Selon une variante de réalisation, les microlentilles 84 sont en un matériau différent du matériau optique 83. Par exemple, le matériau optique 83 est une couche de poly(téréphtalate d'éthylène) (PET, polyethylene terephthalate) sur laquelle un réseau de microlentilles 84 en résine à fort indice optique, typiquement de l'ordre de 1,5 à 1,6, est déposé.

Le filtre angulaire 80 est, par exemple, réalisé conformément à l'un des modes de réalisation décrits dans le document FR-A-3063596.

Des éléments rigides 32, par exemple des micropiliers, sont disposés de sorte à ne pas obstruer les microlentilles. De préférence, les éléments rigides 32 sont disposés entre les microlentilles 84.

Dans l'exemple de la figure 8, quatre microlentilles 84 et deux éléments rigides 32 sont représentés. Les éléments rigides 32, prenant forme ici de micropiliers, sont disposés à un intervalle de quatre microlentilles. Selon une variante de réalisation, les éléments rigides peuvent correspondre aux parties périphériques 61 constituées d'un adhésif illustrées en figures 6 et 7.

Les éléments rigides 32 sont par exemple dans le même matériau que le matériau optique 83. Dans ce cas, les éléments rigides 32 et les microlentilles 84 sont fabriqués en une seule et même étape.

Selon une variante de réalisation, les éléments rigides 32 sont en un matériau, de préférence noir, filtrant les longueurs d'onde pour lesquelles le capteur optique 15 est sensible, c'est-à-dire opaque dans les longueurs d'onde du spectre visible et du proche infrarouge, comprises entre 400 et 920 nm.

Selon une autre variante de réalisation, les éléments rigides 32 sont en un matériau de blindage magnétique.

Selon une autre variante de réalisation, les éléments rigides 32 sont des éléments piézoélectriques ou en matériau résistif.

Selon une autre variante de réalisation, les éléments rigides 32 sont des électrodes dont la fonction de détection est basée sur une méthode capacitive.

Les éléments rigides 32 ont par exemple une fonction de support, entre la surface supérieure du filtre angulaire 22 et la surface inférieure de la première couche 21 comprenant un écran (non représenté en figure 8). Lorsqu'une force est appliquée sur l'écran (typiquement sous l'effet d'un doigt d'utilisateur), l'écran se déforme. Le support, fourni par les éléments rigides, permet d'empêcher à l'écran d'entrer en contact avec les microlentilles 84, et protéger ainsi les microlentilles. Dans le cas où la première couche 21 n'est supportée qu'en périphérie, l'espace ou "air-gap" entre l'écran et les microlentilles 84 doit être choisi pour empêcher à l'écran d'entrer en contact avec les microlentilles 84.

Selon une variante de réalisation, des éléments rigides opaques dans les longueurs d'onde du spectre visible et du proche infrarouge sont disposés sur au moins une partie périphérique du capteur optique de sorte à obstruer optiquement les microouvertures périphériques du capteur. Cela permet de faciliter la calibration du capteur d'image.

La figure 9 est une vue en coupe transversale et partielle d'un autre mode de réalisation d'un filtre angulaire 80 et d'une couche d'interface surjacente.

Le mode de réalisation de la figure 9 diffère de celui décrit en relation avec la figure 8 en ce que des éléments rigides 32 sont disposés entre toutes les microlentilles 84. Ce mode de réalisation comprend donc la densité maximale possible d'éléments rigides.

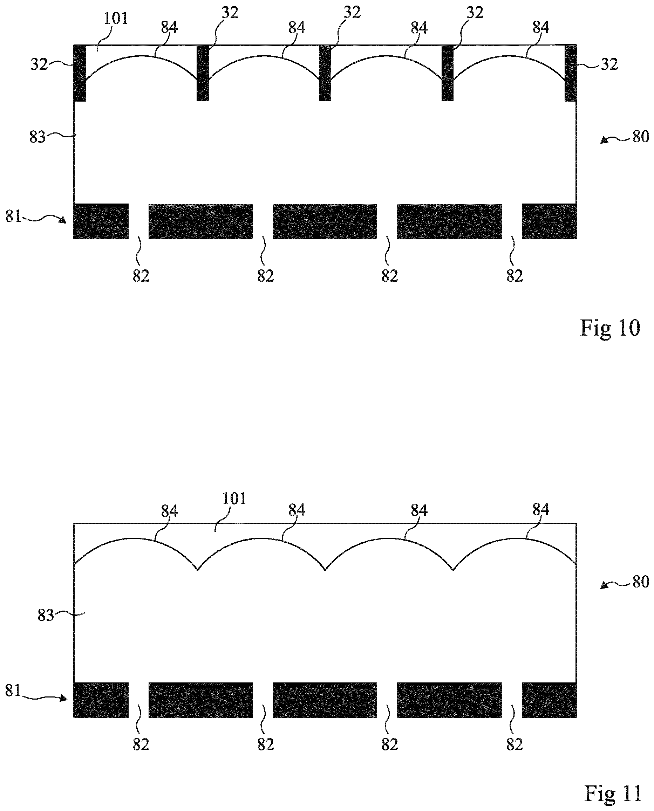

La figure 10 est une vue en coupe transversale et partielle d'un autre mode de réalisation d'un filtre angulaire 80 et d'une couche d'interface surjacente.

Le mode de réalisation de la figure 10 diffère de celui décrit en relation avec la figure 9 en ce que l'espace 101 compris entre la surface supérieure du filtre angulaire 22 et la surface inférieure de l'écran 21 (non représenté en figure 10) est rempli d'un matériau optiquement transparent, par exemple un adhésif à faible indice optique (LOCA) ou une résine à faible indice optique.

La figure 11 est une vue en coupe transversale et partielle d'encore un autre mode de réalisation d'un filtre angulaire 80 et d'une couche d'interface surjacente.

Le mode de réalisation de la figure 11 diffère de celui de la figure 10 en ce que aucun élément rigide 32 n'est présent dans l'espace 101. Cet espace 101, rempli d'un matériau optiquement transparent, par exemple un adhésif à faible indice optique (LOCA), assure à la fois la fonction de support et la fonction d'interface optique entre l'écran et le filtre angulaire.

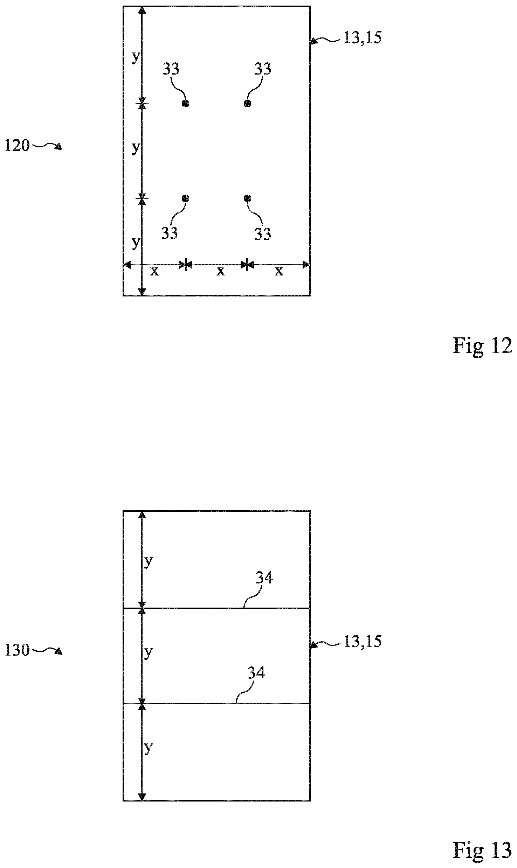

La figure 12 est une vue de dessus schématique d'un mode de réalisation d'un dispositif 120 comprenant un capteur optique sous un écran partiellement transparent.

Le dispositif 120 est ici un dispositif où l'écran 13 et le capteur optique 15 ont la même superficie.

Plusieurs éléments rigides sont au moins partiellement répartis en surface du capteur optique 15.

Selon ce mode de réalisation, des éléments rigides 32 en forme de piliers 33 sont généralement disposés avec un espacement régulier de sorte à former un motif. Par exemple, un même espacement x sépare horizontalement, dans le sens d'orientation de la figure, les piliers rigides 33 deux à deux. Ce même espacement x sépare par exemple le bord du dispositif des piliers rigides 33 les plus proches.

Similairement, un espacement "y" sépare verticalement, dans le sens d'orientation de la figure, les piliers rigides 33 deux à deux. Ce même espacement "y" sépare le bord du dispositif des piliers rigides 33 les plus proches.

Optionnellement, un élément rigide en forme de cadre périphérique est prévu entre l'écran et le capteur optique en périphérie du dispositif pour compléter la fonction de support.

Dans l'exemple illustré en figure 12, quatre piliers rigides 33 sont représentés. En pratique, un plus grand nombre de piliers peuvent être utilisés. Le dispositif comprend un même nombre d'espacements horizontaux x et verticaux y. Les espacements x et y sont différents en raison du rapport de forme du dispositif.

A titre de variante, les espacements x et y sont égaux.

La figure 13 est une vue de dessus schématique d'un autre mode de réalisation d'un dispositif 130 comprenant un capteur optique sous un écran partiellement transparent.

Le dispositif 130 diffère du dispositif 120 décrit en relation avec la figure 12 en ce que les piliers rigides 33 sont remplacés par des languettes horizontales rigides 34.

Similairement aux piliers, les languettes horizontales rigides 34 sont de préférence disposées entre les microlentilles 84 (non représentées en figure 13). Les languettes horizontales rigides 34 s'étendent au moins sur une partie horizontale du dispositif.

Les languettes horizontales rigides 34 sont généralement disposées avec un espacement régulier de sorte à former un motif. Par exemple, un même espacement "y" sépare verticalement, dans le sens d'orientation de la figure, les languettes horizontales rigides 34 deux à deux. Ce même espacement "y" sépare le bord supérieur et le bord inférieur du dispositif des languettes horizontales rigides 34 les plus proches.

Dans l'exemple illustré en figure 13, deux languettes horizontales rigides 34 sont représentées. Ces deux languettes s'étendent sur toute la distance comprise entre le bord gauche et le bord droit du dispositif 130.

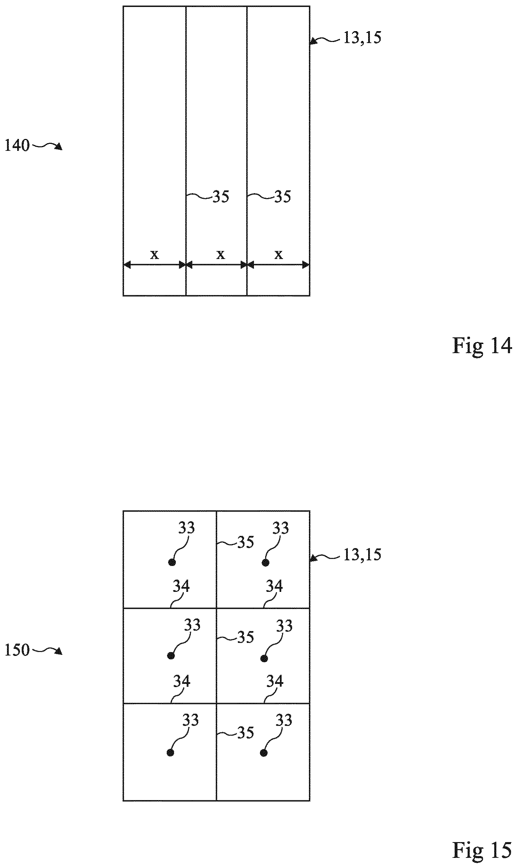

La figure 14 est une vue de dessus schématique d'un autre mode de réalisation d'un dispositif 140 comprenant un capteur optique sous un écran partiellement transparent.

Le dispositif 140 diffère du dispositif 130 décrit en relation avec la figure 13 en ce que les languettes horizontales rigides sont remplacées par des languettes verticales rigides 35.

Similairement aux languettes horizontales rigides 34 de la figure 13, les languettes verticales rigides 35 sont de préférence disposées entre les microlentilles 84 (non représentées en figure 14). Les languettes verticales rigides 35 s'étendent au moins sur une partie verticale du dispositif.

Les languettes verticales rigides 35 sont généralement disposées avec un espacement régulier de sorte à former un motif. Par exemple, un même espacement x sépare horizontalement, dans le sens d'orientation de la figure, les languettes verticales rigides 35 deux à deux. Ce même espacement x sépare par exemple le bord gauche et le bord droit du dispositif des languettes verticales rigides 35 les plus proches.

Dans l'exemple illustré en figure 14, deux languettes verticales rigides 35 sont représentées. Ces deux languettes s'étendent sur toute la distance comprise entre le bord supérieur et le bord inférieur du dispositif 140.

La figure 15 est une vue de dessus schématique d'encore un autre mode de réalisation d'un dispositif 150 comprenant un capteur optique sous un écran partiellement transparent.

Le dispositif 150 comprend une combinaison d'éléments de support, précédemment décrits en relation avec les figures 12, 13 et 14, parmi lesquels :
des piliers rigides 33;
des languettes horizontales rigides 34 ; et
des languettes verticales rigides 35.

Les éléments de support 33, 34 et 35 sont généralement disposés avec un espacement régulier de sorte à former un motif.

Dans l'exemple de la figure 15, le dispositif comprend six piliers 33, quatre languettes horizontales 34 s'étendant chacune sur sensiblement la moitié de la partie horizontale du dispositif et trois languettes verticales 35 s'étendant chacune sur sensiblement un tiers de la partie verticale du dispositif.

Selon une variante de réalisation, les languettes horizontales 34 et verticales 35 constituent un unique élément complexe de support. Cet élément complexe de support peut par exemple prendre la forme d'un maillage ou d'un nid d'abeilles.

L'homme de l'art comprendra que les différents motifs et combinaisons d'éléments de support décrits en relation avec les figures 12 à 15 sont compatibles avec un mode de réalisation où le dispositif comprend un capteur optique 15 de superficie inférieure à celle de l'écran 13.

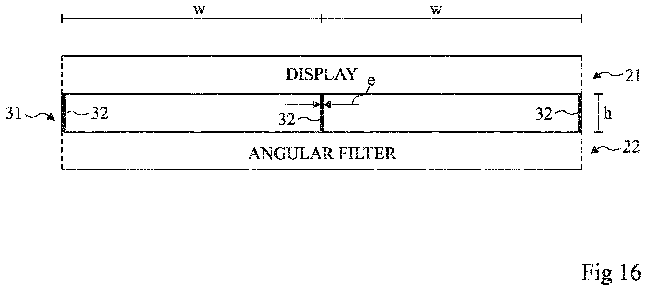

La figure 16 est une vue en coupe transversale et partielle illustrant un détail d'un mode de réalisation d'un dispositif comprenant un capteur optique sous un écran partiellement transparent.

La figure 16 est une vue partielle du dispositif tel que décrit en relation avec la figure 3.

Cette figure illustre une partie de la première couche 21, une partie de la deuxième couche 22 et une partie du niveau 31 comprenant trois éléments rigides 32. L'espacement, ou pas horizontal w, entre les éléments rigides 32 deux à deux est dans cet exemple constant. Tous les éléments rigides ont une hauteur h identique. La hauteur h est généralement comprise entre 1 et 300 micromètres, de préférence entre 1 et 150 micromètres, préférentiellement entre 1 et 50 micromètres. De préférence, l'espacement w entre les éléments rigides 32 deux à deux est compris entre 1 et 67 micromètres. De préférence, la largeur ou épaisseur "e" des éléments rigides est comprise entre 1 et 67 micromètres.

Selon une variante de réalisation, l'espacement entre les éléments rigides deux à deux n'est pas constant. Dans ce cas, l'espacement entre les éléments rigides 32 deux à deux est compris entre 1 et 67 micromètres.

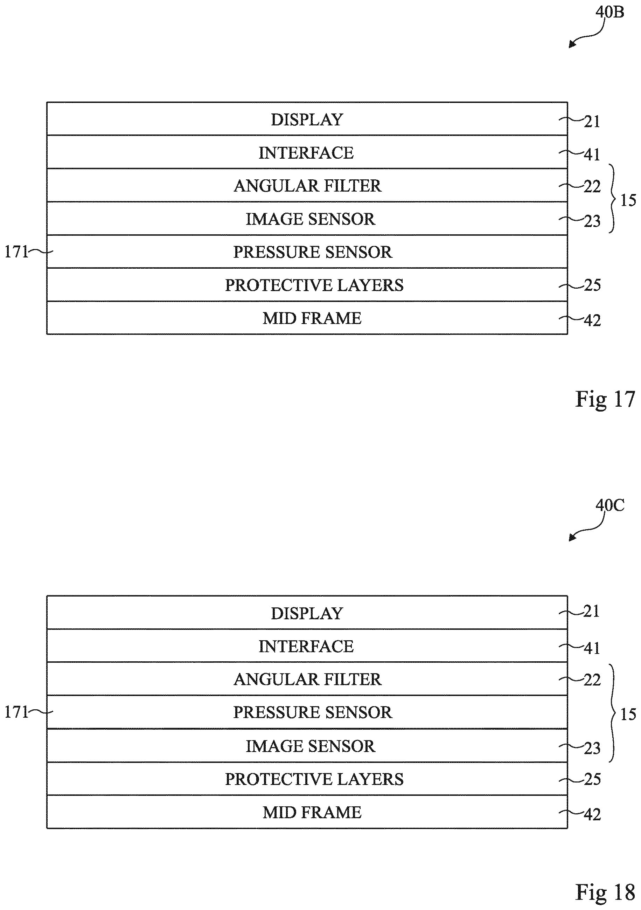

La figure 17 est une vue en coupe transversale d'un mode de réalisation d'un dispositif 40B comprenant un capteur optique sous un écran partiellement transparent, comprenant en outre un capteur de pression.

Le dispositif 40B représenté en figure 17 diffère du dispositif 40 décrit en relation avec la figure 4 par le fait qu'il comprend en outre une couche 171, comprenant un capteur de pression (PRESSURE SENSOR). La couche 171 est disposée entre la couche 23 comprenant le capteur d'image et l'empilement 25. En d'autres termes, le capteur de pression est disposé sous le capteur optique 15.

Un capteur de pression permet de déterminer une tentative d'activation du capteur optique par un utilisateur (typiquement pour lire son empreinte digitale). Ceci permet de n'activer le capteur optique qu'en cas de besoin et réduit ainsi l'énergie consommée. Une configuration possible serait d'activer le capteur d'image pour récupérer l'empreinte digitale de l'utilisateur si une pression sur l'écran est présente pendant une période de temps donnée, par exemple une seconde.

La figure 18 est une vue en coupe transversale d'un autre mode de réalisation d'un dispositif 40C comprenant un capteur optique sous un écran partiellement transparent, comprenant en outre un capteur de pression.

Le dispositif 40C représenté en figure 18 diffère du dispositif 40B décrit en relation avec la figure 17 par le fait que le capteur de pression (PRESSURE SENSOR) est disposé entre la deuxième couche 22 comprenant le filtre angulaire et la troisième couche 23 comprenant le capteur d'image.

Dans ce mode de réalisation le capteur de pression (PRESSURE SENSOR) est intégré au capteur optique 15. Etant situé au-dessus du capteur d'image, le capteur de pression est de préférence en un matériau optiquement transparent, et/ou disposé de manière localisée en bord du capteur optique 15 ou entre les photodiodes du capteur.

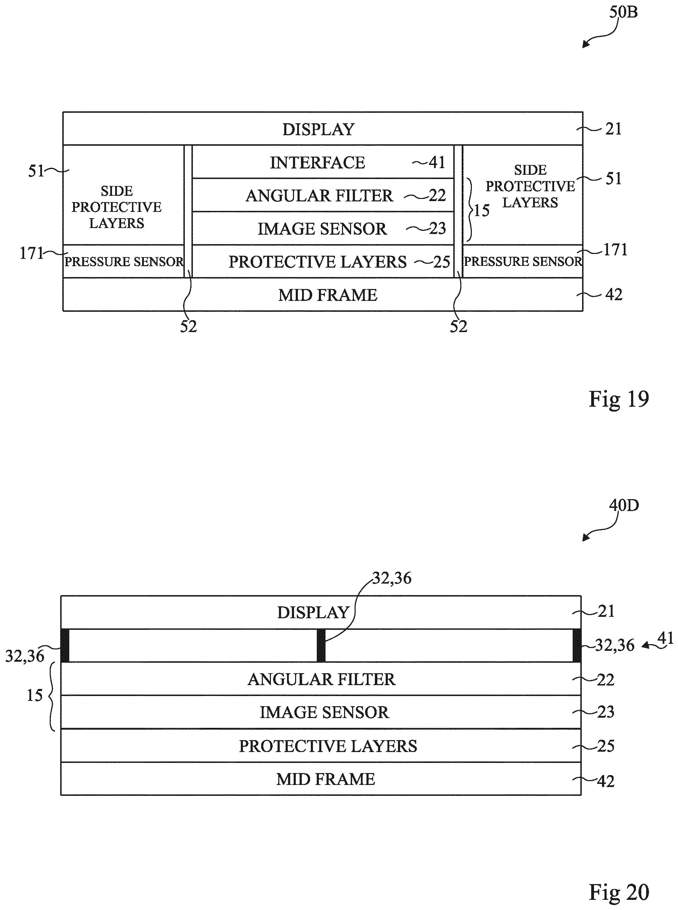

La figure 19 est une vue en coupe transversale d'un autre mode de réalisation d'un dispositif 50B comprenant un capteur optique sous un écran partiellement transparent, comprenant en outre un capteur de pression.

Le dispositif 50B représenté en figure 19 diffère du dispositif 50 décrit en relation avec la figure 5 en ce que le dispositif comprend, en périphérie, des couches 171, comprenant un capteur de pression (PRESSURE SENSOR). Les couches 171 sont disposées entre les empilements périphériques 51 et le châssis 42.

La figure 20 est une vue en coupe transversale d'encore un autre mode de réalisation d'un dispositif 40D comprenant un capteur optique sous un écran partiellement transparent, comprenant en outre un capteur de pression.

Le dispositif 40D représenté en figure 20 reprend les couches de la figure 4, en considérant que la couche d'interface 41 comprend des éléments rigides 32. Selon un mode de réalisation, ces éléments 32 (piliers ou languettes) intègrent des capteurs de pression 36. En d'autres termes, les capteurs des pressions 36 sont disposés sur le capteur optique 15.

Selon un mode de réalisation, les capteurs des pressions 36 sont constitués des éléments rigides eux-mêmes qui sont alors des éléments piézoélectriques ou en matériau résistif.

Selon un autre mode de réalisation, les capteurs de pression 36 sont constitués d'éléments distincts disposés sous au moins une partie des éléments rigides 32.

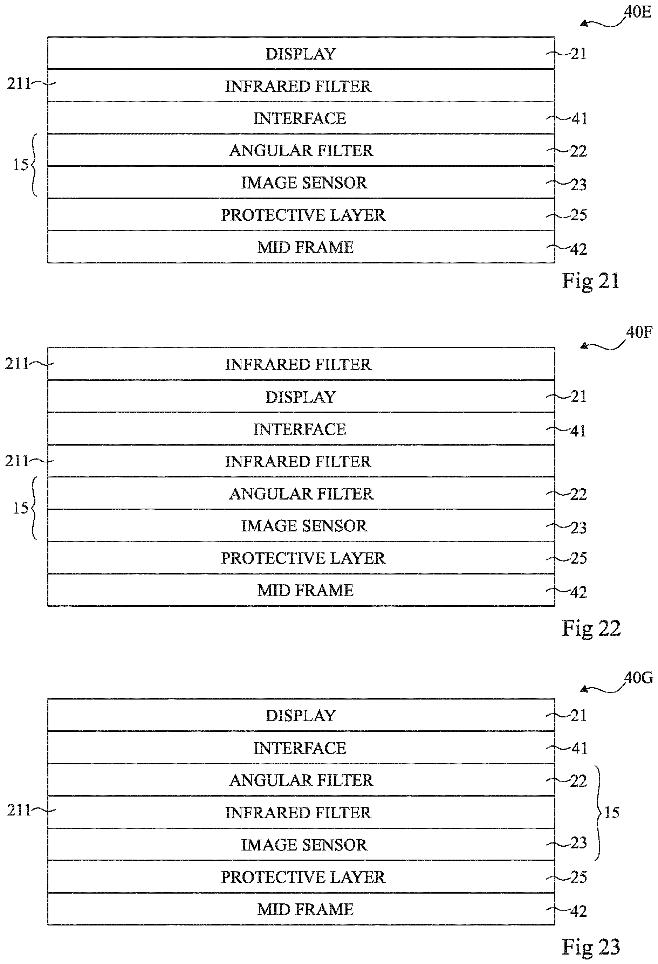

La figure 21 est une vue en coupe transversale d'un mode de réalisation d'un dispositif 40E comprenant un capteur optique sous un écran partiellement transparent, comprenant en outre un filtre infrarouge.

Le dispositif 40E représenté en figure 21 diffère du dispositif 40 décrit en relation avec la figure 4 par le fait qu'il comprend une couche 211 comprenant un filtre infrarouge (INFRARED FILTER). Le filtre infrarouge a une longueur d'onde de coupure de préférence à 600 nm et une transmittance de 0,1 %, correspondant à une densité optique OD3, de 600 nm à 920 nm, ou de 600 nm à la longueur d'onde maximale absorbée par le capteur d'image. Par exemple, dans le cas où le capteur optique absorbe les longueurs d'onde jusqu'à 700 nm, le filtre est conçu pour filtrer les longueurs d'onde de 600 nm à 700 nm. La couche 211 est disposée entre la première couche 21 comprenant un écran et la couche d'interface 41.

La figure 22 est une vue en coupe transversale d'un autre mode de réalisation d'un dispositif 40F comprenant un capteur optique sous un écran partiellement transparent, comprenant en outre un filtre infrarouge.

Le dispositif 40F représenté en figure 22 diffère du dispositif 40 décrit en relation avec la figure 4 par le fait qu'il comprend deux couches 211 comprenant chacune un filtre infrarouge (INFRARED FILTER). Les couches 211 sont disposées, respectivement, sur la première couche 21 comprenant un écran et entre la couche d'interface 41 et la deuxième couche 22 comprenant un filtre angulaire.

En variante, seule l'une des deux couches 211 peut être prévue.

La figure 23 est une vue en coupe transversale d'encore un autre mode de réalisation d'un dispositif 40G comprenant un capteur optique sous un écran partiellement transparent, comprenant en outre un filtre infrarouge.

Le dispositif 40G représenté en figure 23 diffère du dispositif 40E décrit en relation avec la figure 21 par le fait que le filtre infrarouge (INFRARED FILTER) est disposé à l'intérieur du capteur optique 15, entre la deuxième couche 22 comprenant un filtre angulaire et la troisième couche 23 comprenant un capteur d'image.

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art dans le cadre des revendications annexées.

Enfin, la mise en oeuvre pratique des modes de réalisation et variantes décrits est à la portée de l'homme du métier à partir des indications fonctionnelles données ci-dessus. En particulier, le choix des adhésifs à faible indice optique utilisés dépend des besoins optique et/ou structurel du mode de réalisation mis en oeuvre.

## Revendications

1. Dispositif (20 ; 30 ; 40 ; 50), comprenant :
un écran au moins partiellement transparent (13) ;
un capteur optique (15) ; et
entre le capteur et l'écran, au moins un élément rigide (32 ; 33 ; 34 ; 35) disposé entre des microlentilles (84) du capteur optique (15), ledit au moins un élément rigide constituant un élément de support entre l'écran (13) et le capteur optique (15).

2. Dispositif (20 ; 30 ; 40 ; 50) selon la revendication 1, dans lequel le au moins un élément rigide (32) est un pilier (33).

3. Dispositif (20 ; 30 ; 40 ; 50) selon la revendication 1 ou 2, dans lequel le au moins un élément rigide (32) est une languette (34 ; 35).

4. Dispositif (20 ; 30 ; 40 ; 50) selon l'une quelconque des revendications 1 à 3, dans lequel les éléments rigides ont une hauteur (h) identique, ladite hauteur étant comprise entre 1 et 300 microns, de préférence entre 1 et 150 microns, préférentiellement entre 1 et 50 microns.

5. Dispositif (20 ; 30 ; 40 ; 50) selon l'une quelconque des revendications 1 à 4, dans lequel l'espace (w) entre deux éléments rigides (32 ; 33 ; 34 ; 35) est compris entre 1 et 67 microns.

6. Dispositif (20 ; 30 ; 40 ; 50) selon l'une quelconque des revendications 1 à 5, dans lequel le au moins un élément rigide (32 ; 33 ; 34 ; 35) est d'un même matériau qu'un des matériaux optiques (83) du capteur optique (15).

7. Dispositif (20 ; 30 ; 40 ; 50) selon l'une quelconque des revendications 1 à 5, dans lequel le au moins un élément rigide (32 ; 33 ; 34 ; 35) est en un matériau filtrant les longueurs d'onde comprises entre 400 et 920 nm, de préférence noir.

8. Dispositif (20 ; 30 ; 40 ; 50) selon l'une quelconque des revendications 1 à 5, dans lequel le au moins un élément rigide (32 ; 33 ; 34 ; 35) est en un matériau de blindage électromagnétique.

9. Dispositif (20 ; 30 ; 40 ; 50) selon l'une quelconque des revendications 1 à 5, dans lequel le au moins un élément rigide (32 ; 33 ; 34 ; 35) est un élément piézoélectrique ou est en un matériau résistif.

10. Dispositif (20 ; 30 ; 40 ; 50) selon l'une quelconque des revendications 1 à 9, comprenant en outre entre l'écran (13) et le capteur optique (15) une couche (24 ; 41) ayant au moins une partie optiquement transparente et non diffusante d'un indice de réfraction inférieur d'au moins 0,1, de préférence d'au moins 0,15, par rapport à l'indice de réfraction d'un matériau optique (83) du capteur optique (15).

11. Dispositif (20 ; 30 ; 40 ; 50) selon la revendication 10, dans lequel ladite partie optiquement transparente et non diffusante est :
constituée d'air ; ou
constituée d'un adhésif à faible indice optique ; ou
constituée d'une résine à faible indice optique.

12. Dispositif (20 ; 30 ; 40 ; 50) selon l'une quelconque des revendications 1 à 11, dans lequel le capteur optique (15) est de même superficie que l'écran (13).

13. Dispositif (20 ; 30 ; 40 ; 50) selon l'une quelconque des revendications 1 à 11, dans lequel le capteur optique (15) est de superficie inférieure à celle de l'écran (13).

14. Dispositif (20 ; 30 ; 40 ; 50) selon l'une quelconque des revendications 1 à 13, dans lequel le dispositif comprend un ou plusieurs capteurs de pression.

15. Dispositif (20 ; 30 ; 40 ; 50) selon la revendication 14, dans lequel :
le ou les capteurs de pression sont disposés en périphérie du capteur optique (15) ; et/ou
le ou les capteurs de pression sont disposés sous le capteur optique (15) ; et/ou
le ou les capteurs de pression sont disposés sur le capteur optique (15) ; et/ou
le ou les capteurs de pression (36) sont disposés sous au moins une partie des éléments rigides (32 ; 33 ; 34 ; 35) ; et/ou
le ou les capteurs de pression (36) sont intégrés à un ou plusieurs éléments rigides (32 ; 33 ; 34 ; 35).

16. Dispositif (20 ; 30 ; 40 ; 50) selon l'une quelconque des revendications 1 à 15, dans lequel le capteur optique (15) est un capteur d'empreintes digitales.

17. Dispositif (20 ; 30 ; 40 ; 50) selon l'une quelconque des revendications 1 à 16, dans lequel le dispositif comprend au moins un filtre infrarouge, ayant une longueur d'onde de coupure à 600 nm et une transmittance de 0,1 % de 600 nm à 920 nm, disposé :
entre ledit écran (13) et ladite couche (24 ; 41) ; et/ou
entre ledit écran (13) et un verre de protection d'écran ; et/ou
entre ladite couche (24 ; 41) et le capteur optique (15) ; et/ou
dans le capteur optique (15).

18. Téléphone mobile comprenant un dispositif (20 ; 30 ; 40 ; 50) selon l'une quelconque des revendications 1 à 17.

## Patentansprüche

1. Vorrichtung (20; 30; 40; 50), die Folgendes aufweist:
einen wenigstens teilweise transparenten Bildschirm (13);
einen optischen Sensor (15); und
zwischen dem Sensor und dem Bildschirm wenigstens ein starres Element (32; 33; 34; 35), das zwischen Mikrolinsen (84) des optischen Sensors (15) angeordnet ist, wobei das wenigstens eine starre Element ein Stützelement zwischen dem Bildschirm (13) und dem optischen Sensor (15) bildet.

2. Vorrichtung (20; 30; 40; 50) nach Anspruch 1, wobei das wenigstens eine starre Element (32) ein Pfeiler (33) ist.

3. Vorrichtung (20; 30; 40; 50) nach Anspruch 1 oder 2, wobei das wenigstens eine starre Element (32) eine Lasche (34; 35) ist.

4. Vorrichtung (20; 30; 40; 50) nach einem der Ansprüche 1 bis 3, wobei die starren Elemente eine identische Höhe (h) aufweisen, die im Bereich von 1 bis 300 Mikrometern, vorzugsweise von 1 bis 150 Mikrometern, vorzugsweise von 1 bis 50 Mikrometern liegt.

5. Vorrichtung (20; 30; 40; 50) nach einem der Ansprüche 1 bis 4, wobei der Abstand (w) zwischen zwei starren Elementen (32; 33; 34; 35) im Bereich von 1 bis 67 Mikrometern liegt.

6. Vorrichtung (20; 30; 40; 50) nach einem der Ansprüche 1 bis 5, wobei das wenigstens eine starre Element (32; 33; 34; 35) aus dem gleichen Material wie eines der optischen Materialien (83) des optischen Sensors (15) besteht.

7. Vorrichtung (20; 30; 40; 50) nach einem der Ansprüche 1 bis 5, wobei das wenigstens eine starre Element (32; 33; 34; 35) aus einem Material besteht, das Wellenlängen im Bereich von 400 bis 920 nm, vorzugsweise schwarz, filtert.

8. Vorrichtung (20; 30; 40; 50) nach einem der Ansprüche 1 bis 5, wobei das wenigstens eine starre Element (32; 33; 34; 35) aus einem elektromagnetisch abschirmenden Material hergestellt ist.

9. Vorrichtung (20; 30; 40; 50) nach einem der Ansprüche 1 bis 5, wobei das wenigstens eine starre Element (32; 33; 34; 35) ein piezoelektrisches Element ist oder aus einem Widerstandsmaterial hergestellt ist.

10. Vorrichtung (20; 30; 40; 50) nach einem der Ansprüche 1 bis 9, ferner aufweisend zwischen dem Bildschirm (13) und dem optischen Sensor (15) eine Schicht (24; 41) mit wenigstens einem nicht streuenden, optisch klaren Bereich aufweist, dessen Brechungsindex um wenigstens 0,1, vorzugsweise um wenigstens 0,15, kleiner ist als der Brechungsindex eines optischen Materials (83) des optischen Sensors (15).

11. Vorrichtung (20; 30; 40; 50) nach Anspruch 10, wobei der nicht streuende, optisch klare Bereich:
aus Luft besteht; oder
aus einem Klebstoff mit niedrigem optischen Index hergestellt ist; oder
aus einem Harz mit einem niedrigen optischen Index hergestellt ist.

12. Vorrichtung (20; 30; 40; 50) nach einem der Ansprüche 1 bis 11, wobei der optische Sensor (15) die gleiche Oberflächenfläche wie der Bildschirm (13) hat.

13. Vorrichtung (20; 30; 40; 50) nach einem der Ansprüche 1 bis 11, wobei der optische Sensor (15) eine kleinere Oberflächenfläche als der Bildschirm (13) aufweist.

14. Vorrichtung (20; 30; 40; 50) nach einem der Ansprüche 1 bis 13, wobei die Vorrichtung einen oder mehrere Drucksensoren aufweist.

15. Die Vorrichtung (20; 30; 40; 50) nach Anspruch 15, wobei:
der/die Drucksensor(en) an der Peripherie des optischen Sensors (15) angeordnet sind; und/oder
der/die Drucksensor(en) unterhalb des optischen Sensors (15) angeordnet ist/sind; und/oder
der/die Drucksensor(en) auf dem optischen Sensor (15) angeordnet ist/sind; und/oder
der/die Drucksensor(en) (36) unter wenigstens einem Teil der starren Elemente (32; 33; 34; 35) angeordnet ist/sind; und/oder
der/die Drucksensor(en) (36) in ein oder mehrere starre Elemente (32; 33; 34; 35) integriert ist/sind.

16. Vorrichtung (20; 30; 40; 50) nach einem der Ansprüche 1 bis 15, wobei der optische Sensor (15) ein Fingerabdrucksensor ist.

17. Vorrichtung (20; 30; 40; 50) nach einem der Ansprüche 1 bis 16, wobei die Vorrichtung wenigstens einen Infrarotfilter mit einer Grenzwellenlänge bei 600 nm und einer Durchlässigkeit von 0,1 % von 600 nm bis 920 nm aufweist, der angeordnet ist:
zwischen dem Bildschirm (13) und der Schicht (24; 41); und/oder
zwischen dem Bildschirm (13) und einem Bildschirmschutzglas; und/oder
zwischen der Schicht (24; 41) und dem optischen Sensor (15); und/oder
in dem optischen Sensor (15).

18. Mobiltelefon mit der Vorrichtung (20; 30; 40; 50) nach einem der Ansprüche 1 bis 17.

## Claims

1. A device (20; 30; 40; 50) comprising:
an at least partially transparent screen (13);
an optical sensor (15); and
between the sensor and the screen, at least one rigid element (32; 33; 34; 35) is arranged between microlenses (84) of the optical sensor (15), said at least on rigid element forming a support element between the screen (13) and the optical sensor (15).

2. The device (20; 30; 40; 50) according to claim 1, wherein the at least one rigid element (32) is a pillar (33).

3. The device (20; 30; 40; 50) according to claim 1 or 2, wherein the at least one rigid element (32) is a tab (34; 35).

4. The device (20; 30; 40; 50) according to any of claims 1 to 3, wherein the rigid elements have an identical height (h), said height being in the range from 1 to 300 micrometers, preferably from 1 to 150 micrometers, preferably from 1 to 50 micrometers.

5. The device (20; 30; 40; 50) according to any of claims 1 to 4, wherein the interval (w) between two rigid elements (32; 33; 34; 35) is in the range from 1 to 67 micrometers.

6. The device (20; 30; 40; 50) according to any of claims 1 to 5, wherein the at least one rigid element (32; 33; 34; 35) is made of a same material as one of the optical materials (83) of the optical sensor (15).

7. The device (20; 30; 40; 50) according to any of claims 1 to 5, wherein the at least one rigid element (32; 33; 34; 35) is made of a material filtering wavelengths in the range from 400 to 920 nm, preferably black.

8. The device (20; 30; 40; 50) according to any of claims 1 to 5, wherein the at least one rigid element (32; 33; 34; 35) is made of an electromagnetic shielding material.

9. The device (20; 30; 40; 50) according to any of claims 1 to 5, wherein the at least one rigid element (32; 33; 34; 35) is a piezoelectric element or is made of a resistive material.

10. The device (20; 30; 40; 50) according to any of claims 1 to 9, further comprising between the screen (13) and the optical sensor (15) a layer (24; 41) having at least one non-scattering optically clear portion having a refraction index smaller by at least 0.1, preferably by at least 0.15, than the refraction index of an optical material (83) of the optical sensor (15).

11. The device (20; 30; 40; 50) according to claim 10, wherein said non-scattering optically clear portion is:
made of air; or
made of an adhesive having a low optical index; or
made of a resin having a low optical index.

12. The device (20; 30; 40; 50) according to any of claims 1 to 11, wherein the optical sensor (15) has the same surface area as the screen (13).

13. The device (20; 30; 40; 50) according to any of claims 1 to 11, wherein the optical sensor (15) has a surface area smaller than that of the screen (13).

14. The device (20; 30; 40; 50) according to any of claims 1 to 13, wherein the device comprises one or a plurality of pressure sensors.

15. The device (20; 30; 40; 50) according to claim 15, wherein:
the pressure sensor(s) are arranged at the periphery of the optical sensor (15); and/or
the pressure sensor(s) are arranged under the optical sensor (15); and/or
the pressure sensor(s) are arranged on the optical sensor (15); and/or
the pressure sensor(s) (36) are arranged under at least a portion of the rigid elements (32; 33; 34; 35); and/or
the pressure sensor(s) (36) are integrated to one or a plurality of rigid elements (32; 33; 34; 35).

16. The device (20; 30; 40; 50) according to any of claims 1 to 15, wherein the optical sensor (15) is a fingerprint sensor.

17. The device (20; 30; 40; 50) according to any of claims 1 to 16, wherein the device comprises at least one infrared filter, having a cutoff wavelength at 600 nm and a 0.1% transmittance from 600 nm to 920 nm, arranged:
between said screen (13) and said layer (24; 41); and/or
between said screen (13) and a screen protection glass; and/or
between said layer (24; 41) and the optical sensor (15); and/or
in the optical sensor (15).

18. A cell phone comprising the device (20; 30; 40; 50) according to any of claims 1 to 17.
